Europäisches Patentamt

European Patent Office

Office européen des brevets

(19)

(11) Publication number: **0 228 251**
**B1**

# (12) EUROPEAN PATENT SPECIFICATION

(45) Date of publication of the patent specification:
05.12.90

(51) Int. Cl.⁵: **F16C 17/12**

(21) Application number: **86309897.6**

(22) Date of filing: **18.12.86**

(54) Fluid thrust bearing.

(30) Priority: **19.12.85 US 811972**

(43) Date of publication of application:
**08.07.87 Bulletin 87/28**

(45) Publication of the grant of the patent:
**05.12.90 Bulletin 90/49**

(84) Designated Contracting States:
**DE FR GB IT SE**

(56) References cited:
**FR-A- 2 516 995**
**US-A- 3 382 014**
**US-A- 3 635 534**
**US-A- 4 208 076**
**US-A- 4 225 196**
**US-A- 4 227 753**
**US-A- 4 451 163**

(73) Proprietor: **ALLIED-SIGNAL INC. (a Delaware
corporation), Columbia Road and Park Avenue P.O.
Box 2245R, Morristown New Jersey 07960(US)**

(72) Inventor: **Lee-Van Gu, Alston, 5832 Sunmist Drive,
Rancho Palos Verdes California 90274(US)**

(74) Representative: **Rees, David Christopher et al, Kilburn &
Strode 30 John Street, London WC1N 2DD(GB)**

ACTORUM AG

## Description

Process fluid or gas bearings are now being used in an increasing number of diverse applications. These fluid bearings generally comprise two relatively movable elements with a predetermined spacing therebetween filled with a fluid such as air, which, under dynamic conditions, forms a supporting wedge sufficient to prevent contact between the two relatively movable elements.

More recently, improved fluid bearings, particularly gas bearings of the hydrodynamic type, have been developed by providing foils in the space between the relatively movable bearing elements. Such foils, which are generally thin sheets of a compliant material, are deflected by the hydrodynamic film forces between adjacent bearing surfaces and the foils thus enhance the hydrodynamic characteristics of the fluid bearings and also provide improved operation under extreme load conditions when normal bearing failure might otherwise occur. Additionally, these foils provide the added advantage of accommodating eccentricity of the relatively movable elements and further provide a cushioning and dampening effect.

The ready availability of relatively clean process fluid or ambient atmosphere as the bearing fluid makes these hydrodynamic, fluid film lubricated, bearings particularly attractive for high speed rotating machinery. While in many cases the hydrodynamic or self-acting fluid bearings provide sufficient load bearing capacity solely from the pressure generated in the fluid film by the relative motion of the two converging surfaces, it is sometimes necessary to pressurise externally the fluid between the bearing surfaces to increase the load carrying capability.

While these externally pressurised or hydrostatic fluid bearings increase the load carrying capacity, they do introduce the requirement for an external source of clean fluid under pressure.

In order to position the compliant foils properly between the relatively movable bearing elements, a number of mounting means have been devised. In thrust bearings, it is conventional practice to mount a plurality of individually spaced foils on a foil bearing disc such as by spot welds and position the foil bearing disk on one of the bearing elements as shown in US Patent No. 3, 635, 534. Alternatively, a compliant unitary foil, such as illustrated in US Patent No. 4, 247, 155, has been proposed.

To establish stability of the foils in most of these mounting means, a substantial pre-load is required on the foil. That is, the individual foils must be loaded against the relatively movable bearing element opposed to the bearing elements upon which the foils are mounted. It has been conventional to provide separate compliant stiffener elements or undersprings beneath the foils to supply this required preload as shown in US Patent Nos. 3, 893, 733 and 4, 153, 315.

US Patent No 4208076 shows a thrust bearing for supporting a rotating rotor on a stationary mount. It comprises a pair of corrugated plates mounted back-to-back with an intervening plain sheet and a plain bearing sheet for contact with the moving rotating rotor. The four components are spot welded together.

It is an object of the present invention to provide a simplified but more effective fluid bearing.

According to the invention, there is provided a fluid thrust bearing comprising a pair of members (10, 28) arranged for relative rotation with respect to one another and a compliant foil bearing (14, 22) located between the two relatively rotatable members (10, 28), the compliant foil bearing comprising a thrust disc (14) having a plurality of compliant foils (16) and an underspring (22) including a plurality of protuberances (24) standing proud of the surface of the underspring (22), characterised in that the protuberances (24) face towards the thrust disc (14), and further characterised by a plurality of first tabs (32) on the underspring extending in the direction of rotation of the member (10) adjacent the foils (16) upon which the protuberances are formed, and a plurality of second tabs (80) on the underspring (70) extending in a generally radial direction and protruding away from the thrust disc (14), the stiffness of the first tabs (72, 74, 76) being greater than the stiffness of the second tabs (80), and the underspring being stamped from a sheet of uniform thickness.

The two relatively rotating members may be a thrust runner and a thrust plate which rotatably supports the thrust runner.

Preferably, one protuberance is generally disposed in supporting relationship to an individual compliant foil. Preferably the compliant foils are individually mounted on the thrust disc, though they may be formed integrally. The protuberances may constitute spring bumps which provide improved load capacity and distribution.

Preferably, the protuberances are constituted by at least one radially extending bump extending across each of the first tabs. The bumps are preferably arcuate and their height may be between 0.003 and 0.060 inches (0.076 to 1.52mm). Alternatively, the first tabs may be arcuate and thereby constitute the protuberances in themselves. The first tabs may each be defined by a generally U-shaped slot. The underspring may be in the form of a foil stiffener disc, and the protuberances may be formed by stamping. The first tabs may include two radially extending bumps. Each tab may include a first radially extending bump near the free end of the tab and a second radially extending bump near the base of the tab, the first bump having a height generally between 0.0005 inches and 0.030 inches (0.076 to 1.52mm) greater than the height of the second bump. The bumps may have a radial length generally between 0.2 and 8.0 inches (0.51 cm to 20.3cm). The bumps may diverge radially outwardly and their sides may be radial lines.

The first tabs may be divided into at least two prongs. Preferably, there are three prongs.

According to a preferred embodiment therefore, a fluid thrust bearing comprises a thrust runner a fluid thrust bearing comprising: a thrust runner; a thrust plate to rotatably support the thrust runner; and a compliant foil bearing operably disposed between said thrust runner and said thrust plate and mounted on said thrust plate, said compliant foil bearing including a thrust disc having a plurality of converging surface compliant foils disposed towards said thrust runner and a foil stiffener disc disposed between the thrust disc and the thrust plate, the foil stiffener disc including a plurality of first tabs extending in the direction of rotation of said thrust runner toward said thrust disc with an individual tab generally disposed in a supporting relationship towards an individual foil on said thrust disc and said first tabs divided into at least two generally arcuate prongs, said foil stiffener disc also including a plurality of second tabs extending in a generally radial direction towards said thrust plate.

Preferably, the stiffness of the first tabs is at least $10^2$ times greater than the stiffness of the second tabs, more preferably between $10^2$ and $10^5$ times greater. Preferably, the second tabs are arcuate, though they may be generally straight.

The invention may be carried into practice in various ways and some embodiments will now be described by way of example with reference to the accompanying drawings, in which:

Figure 1 is an exploded perspective view of a foil thrust bearing generally in accordance with the present invention;

Figure 2A is an enlarged partial top plan view of the thrust bearing underspring of the foil thrust bearing of Figure 1;

Figure 2B is an enlarged partial bottom plan view of the thrust bearing underspring of Figure 2A;

Figure 2C is an enlarged perspective view of an individual bump of the thrust bearing underspring of Figure 2A;

Figure 3 is an edge view of the thrust bearing underspring of Figure 2A taken along line 3-3 thereof;

Figure 4 is an enlarged partial top plan view of a second embodiment of a thrust bearing underspring;

Figure 5 is an edge view of the thrust bearing underspring of Figure 4 taken along line 5-5 thereof:

Figure 6 is an enlarged partial top plan view of a third embodiment of a thrust bearing underspring;

Figure 7A is an enlarged partial top plan view of a fourth embodiment of a thrust bearing underspring:

Figure 7B is an enlarged partial perspective view of the thrust bearing underspring of Figure 7A:

Figure 8 is an enlarged partial perspective view of a fifth embodiment of a thrust bearing underspring:

Figure 9 is a sectional view of the thrust bearing under spring of Figure 8 taken along line 9-9 thereof;

Figure 10 is a sectional view of the thrust bearing underspring of Figure 8 taken along line 10-10 thereof; and

Figure 11 is a sectional view of an alternative downwardly extending tab.

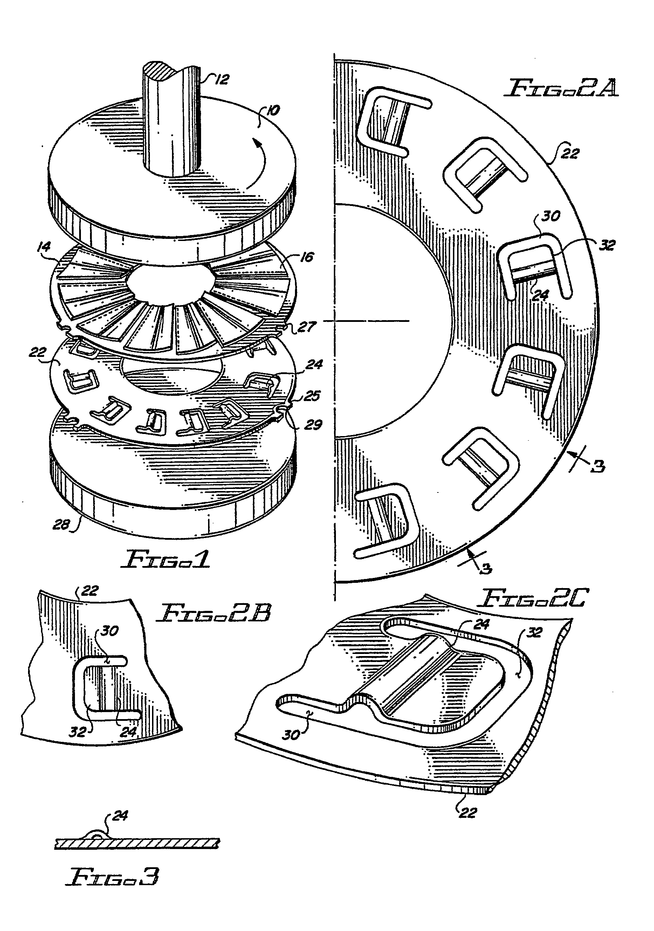

As illustrated in Figure 1, a thrust runner 10, including a shaft 12, is rotatably supported on a thrust plate 28 by means of a thrust bearing disc 14 and a thrust bearing stiffener or underspring 22. The thrust bearing disc 14 includes a plurality of compliant foils 16 while the thrust bearing underspring 22 includes a plurality of bumps 24 thereon to provide stiffness for the thrust bearing disc 14. The underspring 22 may include outer projections 25 having cutouts 29 which can be used to maintain the position of the underspring 22 with respect to the thrust plate 28. similar projections 27 may be spaced around the thrust bearing disc 14.

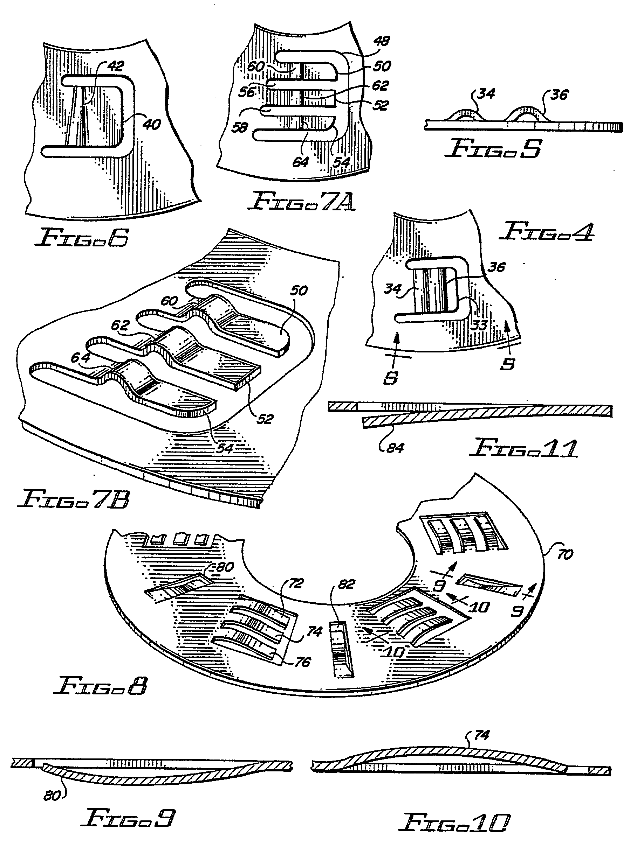

As shown more fully in Figures 2A 3, the thrust bearing underspring 22 generally comprises a thin compliant ring disc having a thickness generally between 0.001 inches and 0.030 inches (0.025 to 0.076 mm). A plurality of generally U-shaped slots 30, with the open ends thereof facing away from the direction of rotation of the thrust runner 10, extend through the entire thickness of the underspring 22. Each of these generally U-shaped slots 30 defines a tab 32 having its free end facing in the direction of rotation of the thrust runner 10. The bumps 24, which extend generally radially, are formed by stamping the tabs 32.

The number of U-shaped slots 30 and hence the number of tabs 32 is equal to the number of thrust bearing foils 16 on the thrust bearing disc 14 which an individual tab disposed generally beneath each individual foil. The height of the bumps 24 is generally between 0.003 inches to 0.060 inches (0.076 to 1.52 mm). The radial length of the bump would depend upon the size of the bearing and would generally be between 0.02 inches to 8 inches (0.51cm to 20.3cm) This embodiment additionally includes downwardly extending tabs formed in radial slots (not shown) as described with reference to and as shown in Figures 8 to 10.

As illustrated in Figures 4 and 5, the tab 33 may include more than a single bump, such as the two bumps 34 and 36. Also, the bump 36 closest to the free end of the tab 33 may have a height greater than the height of the bump 34 closer to the base of the tab 33. The height of the bump 36 would generally be between 0.005 inches and 0.030 inches (0.013 mm to 0.76mm) greater than the height of the bump 34.

Figure 6 illustrates a tab 40 having a bump 42 in which the width of the bump increases radially. It should be recognised that for the purposes of illustration, the radial divergence of the bump 42 is shown as exaggerated. The sides of the bump 42 would generally be radial lines.

As illustrated in Figure 7A and 7B, the tab produced by U-shaped slot 48 may be divided into more than one prong, for example, an inner prong 50, a middle prong 52 and an outer prong 54, by means of an inner slot 56 and an outer slot 58. This arrangement produces an inner bump 60, a middle bump 62, and an outer bump 64, each of which are generally radially aligned.

An alternative underspring 70 is illustrated in Figures 8 to 11. The underspring 70 includes a plurality of upwardly extending tabs, each having an inner prong 72, a middle prong 74, and an outer prong 76. Each of these prongs has a generally arcuate or curved shape. The underspring 70 also includes a plurality of downwardly extending tabs 80 formed in radially extending slots 82. The tabs 80 may also be arcuate or curved in shape as shown in Figure 9 or the tabs 84 may be straight as shown in Figure 11.

While existing chemically etched undersprings are difficult to produce in a highly repeatable manner due to the difficulty in controlling the critical thickness dimensions, undersprings stamped in accordance with the present invention using a constant thickness sheet material consistently produce the series of shallow bumps in a highly repeatable manner. This not only results in a much less complex manufacturing process but provides greater control and better load capacity for the underspring. By slotting the tabs, even more load distribution can be produced in the radial direction. Under load conditions the bumps deform to yield a greater support area for the thrust bearing foil and thus generate a higher load capacity.

Good bearing damping is also achieved when the bump flares under load and the free end of the tab stretches and rubs against the bearing structure. The bump is generally quite stiff in order to provide a good load capacity. The downwardly extending tabs are much less stiff or weaker than the upwardly extending tabs and are used to provide a proper preload in the bearing assembly. The upwardly extending tabs, which provide primary stiffness for the bearing, generally have a stiffness at least $10^2$ times greater than the stiffness of the downwardly extending tabs and this stiffness may be as much and $10^5$ times greater. In other words in operation, the downwardly extending tabs will yield or deform under load before any yielding or deformation of the upwardly extending tabs. While the invention has been illustrated in relation to a thrust bearing, it is equally applicable to a conical bearing which has a thrust component.

**Claims**

1. A fluid thrust bearing comprising a pair of members (10, 28) arranged for relative rotation with respect to one another and a compliant foil bearing (14, 22) located between the two relatively rotatable members (10, 28), the compliant foil bearing comprising a thrust disc (14) having a plurality of compliant foils (16) and an underspring (22) including a plurality of protuberances (24) standing proud of the surface of the underspring (22), characterised in that the protuberances (24) face rowards the thrust disc (14), and further characterised by a plurality of first tabs (32) on the underspring extending in the direction or rotation of the member (10) adjacent the foils (16) upon which the protuberances (24) are formed, and a plurality of second tabs (80) on the underspring (70) extending in a generally radial direction and protruding away from the thrust disc (14), the stiffness of the first tabs (72, 74, 76) being greater than the stiffness of the second tabs (80), and the underspring being stamped from a sheet of uniform thickness.

2. A bearing as claimed in Claim 1, characterised in that the protuberances are constituted by at least one radially extending bump (24) extending across each of the first tabs (32).

3. A bearing as claimed in Claim 1, characterised in that the first tabs (72, 74, 76) are arcuate and thereby constitute the protuberances in themselves.

4. A bearing as claimed in Claim 2, characterised in that each of the first tabs includes two radially extending bumps (34, 36) thereacross.

5. A bearing as claimed in Claim 4, characterised in that each of the first tabs includes a first radially extending bump (36) near its free end and a second radially extending bump (34) near its base, the first bump having a height generally between 0.0005 inches and 0.030 inches (0.076 to 1.52 mm) greater than the height of the second bump.

6. A bearing as claimed in any of Claims 2 to 5, characterised in that the bumps (42) radially outwardly diverge.

7. A bearing as claimed in any of Claims 2 to 6, characterised in that the first tabs are each divided into at least two prongs (50, 52, 54).

**Patentansprüche**

1. Flüssigkeitsdrucklager mit einem Paar von Bauteilen (10, 28), die relativ zueinander drehbar angeordnet sind, und mit einem federnd nachgiebigen Folienlager (14, 22), das zwischen den beiden relativ zueinander drehbaren Bauteilen (10, 28) angeordnet ist, wobei das federnd nachgiebige Folienlager eine Druckscheibe (14) mit einer Vielzahl von federnd nachgiebigen Folien (16) und einer Unterfeder bzw. Versteifung (22) aufweist, die eine Vielzahl von Ansätzen (24) besitzt, welche aus der Oberfläche der Unterfeder (22) vorstehen, dadurch gekennzeichnet, daß die Ansätze (24) der Druckscheibe (14) zugewandt sind, und ferner gekennzeichnet durch eine Vielzahl von ersten Lappen (32) auf der Unterfeder, die in Drehrichtung des Bauteils (10) in der Nähe der Folien (16), auf denen die Ansätze (24) ausgebildet sind, verlaufen, sowie eine Vielzahl von zweiten Lappen (80) auf der Unterfeder (70), die in radialer Richtung verlaufen und von der Druckscheibe (14) weg vorstehen, wobei die Steifigkeit der ersten Lappen (72, 74, 76) größer ist als die Steifigkeit der zweiten Lappen (80) und wobei die Unterfeder aus einem Blech gleichförmiger Dicke gestanzt ist.

2. Lager nach Anspruch 1, dadurch gekennzeichnet, daß die Ansätze durch mindestens einen radial verlaufenden Höcker (24) dargestellt sind, der sich über jeden der ersten Lappen (32) erstreckt.

3. Lager nach Anspruch 1, dadurch gekennzeichnet, daß die ersten Lappen (72, 74, 76) gekrümmt sind und dadurch die Ansätze selbst ausbilden.

4. Lager nach Anspruch 2, dadurch gekennzeichnet, daß jeder der ersten Ansätze zwei in radialer Richtung und quer verlaufende Höcker (34, 36) aufweist.

5. Lager nach Anspruch 4, dadurch gekennzeichnet, daß jeder der ersten Ansätze einen ersten, radial verlaufenden Höcker (36) in der Nähe seines freien Endes und einen zweiten, radial verlaufenden Höcker (34) in der Nähe seiner Basis aufweist, und daß der erste Höcker eine Höhe hat, die zwischen 0,013 mm und 0,76 mm größer als die Höhe des zweiten Höckers.

6. Lager nach einem der Ansprüche 21 bis 5, dadurch gekennzeichnet, daß die Höcker (42) in radialer Richtung nach außen divergieren.

7. Lager nach einem der Ansprüche 2 bis 6, dadurch gekennzeichnet, daß die ersten Lappen jeweils in mindestens zwei Zinken (50, 52, 54) unterteilt sind.

**Revendications**

1.- Palier de butée fluidique comprenant deux éléments (10, 28), disposés pour une rotation relative de l'un par rapport à l'autre, et un coussinet à lames flexibles (14, 22) placé entre les deux éléments en rotation relative (10, 28), le coussinet à lames flexibles comprenant un disque de butée (14) qui comporte une pluralité de lames flexibles (16) et un ressort inférieur (22) qui comporte une pluralité de protubérances (24) en saillie par rapport à la surface du ressort inférieur (22), caractérisé en ce que les protubérances (24) sont tournées vers le disque de butée (14), et caractérisé en outre par une pluralité de premières languettes (32), formées sur le ressort inférieur et s'étendant dans la direction de rotation de l'élément (10) de façon adjacente aux lames (16) et sur lesquelles les protubérances (24) sont formées, et par une pluralité de deuxièmes languettes (80) formées sur le ressort inférieur (70) et s'étendant dans une direction sensiblement radiale et en saillie du côté opposé au disque de butée (14), la rigidité des premières languettes (72, 74, 76) étant plus grande que la rigidité des deuxièmes languettes (80), et le ressort inférieur étant estampé dans une tôle d'épaisseur uniforme.

2.- Palier suivant la revendication 1, caractérisé en ce que les protubérances sont constituées par au moins une bosse s'étendant radialement (24) en travers de chacune des premières languettes (32).

3.- Palier suivant la revendication 1, caractérisé en ce que les premières languettes (72, 74, 76) sont arquées et constituent ainsi les protubérances en elles-mêmes.

4.- Palier suivant la revendication 2, caractérisé en ce que chacune des premières languettes comporte deux bosses s'étendant radialement (34, 36) en travers de la languette.

5.- Palier suivant la revendication 4, caractérisé en ce que chacune des premières languettes comporte une première bosse s'étendant radialement (36), près de son extrémité libre, et une deuxième bosse s'étendant radialement (34) près de sa base, la première bosse ayant une hauteur supérieure à la hauteur de la deuxième bosse, d'une valeur sensiblement comprise entre 0,076 et 1,52 millimètres (0,0005 pouces et 0,030 pouces).

6.- Palier suivant l'une quelconque des revendications 2 à 5, caractérisé en ce que les bosses (42) divergent radialement vers l'extérieur.

7.- Palier suivant l'une quelconque des revendications 2 à 6, caractérisé en ce que les premières languettes sont divisées chacune en au moins deux dents (50, 52, 54).

FIG.1

FIG.2A

FIG.2B

FIG.2C

FIG.3

FIG. 6

FIG. 7A

FIG. 5

FIG. 4

FIG. 7B

FIG. 11

FIG. 8

FIG. 9

FIG. 10